(19) Europäisches Patentamt
European Patent Office
Office européen des brevets

(11) **EP 4 672 370 A2**

(12) **EUROPEAN PATENT APPLICATION**

(43) Date of publication:
**31.12.2025 Bulletin 2026/01**

(21) Application number: 25213818.5

(22) Date of filing: **28.09.2022**

(51) International Patent Classification (IPC):
**H01M 4/36** $^{(2006.01)}$

(52) Cooperative Patent Classification (CPC):
**H01M 50/105; H01M 4/624; H01M 4/625;**
**H01M 10/0525; H01M 10/0565; H01M 10/0585;**
**H01M 50/477; H01M 50/486; H01M 50/489;**
H01M 4/364; H01M 4/623; H01M 10/0562;
H01M 2300/0068; Y02E 60/10; Y02P 70/50

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **28.09.2021 KR 20210128239**
**26.09.2022 KR 20220121373**

(62) Document number(s) of the earlier application(s) in accordance with Art. 76 EPC:
**22876816.4 / 4 213 270**

(71) Applicant: **LG Energy Solution, Ltd.**
**Seoul 07335 (KR)**

(72) Inventors:
• **JIN, Guilong**
**34122 Daejeon (KR)**
• **KIM, Youngbok**
**34122 Daejeon (KR)**

(74) Representative: **Goddar, Heinz J.**
**Boehmert & Boehmert**
**Anwaltspartnerschaft mbB**
**Pettenkoferstrasse 22**
**80336 München (DE)**

Remarks:
This application was filed on 06-11-2025 as a divisional application to the application mentioned under INID code 62.

(54) **ELECTRODE ASSEMBLY FOR SECONDARY BATTERY, AND SECONDARY BATTERY COMPRISING SAME**

(57) The present invention relates to an electrode assembly comprising a plurality of electrode structures comprising a positive electrode, a negative electrode, and a solid electrolyte layer disposed the positive elec- trode and the negative electrode, and polymer layers at both ends of the electrode assembly, and a secondary battery comprising the same.

【Figure 2】

20

EP 4 672 370 A2

## Description

[Technical Field]

This application claims the benefits of priorities based on Korean Patent Application No. 10-2021-0128239 filed on September 28, 2021 and Korean Patent Application No. 10-2022-0121373 filed on September 26, 2022, the entire contents of which are incorporated herein by reference.

The present invention relates to an electrode assembly for a secondary battery and a secondary battery comprising the same, and more particularly, to an electrode assembly for a secondary battery capable of improving the lifetime of the battery and a secondary battery comprising the same.

[Background Art]

With the development of technology for mobile devices and the increase in demand for them, the demand for secondary batteries is also rapidly increasing, and among them, lithium secondary batteries with high energy density and operating voltage and excellent preservation and lifetime properties are widely used as an energy source for various electronic products as well as various mobile devices.

The secondary batteries are roughly classified into cylindrical batteries, prismatic batteries, and pouch-type batteries according to their external and internal structural features, and among them, prismatic batteries and pouch-type batteries that can be stacked with a high degree of integration and have a small width compared to their length are receiving particular attention.

In addition, the secondary batteries are attracting attention as an energy source for electric vehicles, hybrid electric vehicles, etc., which are being proposed as a way to solve air pollution caused by existing gasoline and diesel vehicles that use fossil fuels. Accordingly, the types of applications using secondary batteries are becoming very diversified due to the advantages of the secondary batteries, and in the future, it is expected that secondary batteries will be applied to more fields and products than now.

As such, as the application fields and products of secondary batteries are diversified, types of the batteries are also being diversified to provide output and capacity suitable for them. In addition, batteries applied to the relevant fields and products are strongly required to be small and lightweight.

For example, in the case of small mobile devices such as cell phones, PDAs, digital cameras, notebook computers, etc., as the relevant products tend to become smaller and lighter and thinner, one or two, or three or four small and light battery cells per device are used accordingly. On the other hand, in the case of medium and large-sized devices such as electric vehicles and hybrid electric vehicles, a battery module (also referred to as a "medium and large-sized battery pack") in which a plurality of battery cells are electrically connected is being used due to the need for high output and large capacity. Meanwhile, since the size and weight of the battery module are directly related to the accommodating space and output of the relevant medium and large-sized device, etc., manufacturers are trying to make battery modules as small and lightweight as possible.

The conventional pouch-type battery is formed by bonding both sides, which are contact parts, with the upper end and the lower end, in a state in which the electrode assembly is accommodated in the housing formed on the exterior member and its inner surface which consist of upper and lower two units. Since the exterior member has a laminate structure consisting of a resin layer/metal foil layer/resin layer, they can be adhered by applying heat and pressure to both sides in contact with each other and to the upper end and the lower end to bond the resin layers to each other, and in some cases, can be adhered using adhesives. Since the both sides are in direct contact with the same resin layer of the upper and lower exterior members, it is possible to seal uniformly by melting. On the other hand, in the case of the upper part and the lower part, since the electrode leads are protruded, thermal fusion is performed in a state where a sealing member on a film is interposed between the electrode leads to improve sealing properties, in consideration of the thickness of the electrode leads and the heterogeneity with the material of the exterior member.

However, as the pouch-type secondary battery expands and contracts repeatedly during the charging and discharging process, the internal pressure of the battery is changed. Due to this, there is a problem that the lifetime of the battery is adversely affected.

That is, since the change in the internal pressure of the battery adversely affects the lifetime of the battery, there is a need to develop a technology capable of effectively controlling the change in the internal pressure of the battery.

[Prior Art Documents]

[Patent Documents]

(Patent Document 1) Korean Patent Publication No. 2014-0141825
(Patent Document 2) Korean Patent Publication No. 2021-0039213

[Disclosure]

[Technical Problem]

In order to solve the above problems, it is an object of the present invention to provide an electrode assembly capable of effectively controlling a change in internal pressure due to a change in the volume of a secondary battery to improve the lifetime property of the secondary battery, and a pouch-type secondary battery comprising the same.

[Technical Solution]

In order to achieve the above object, the present invention provides an electrode assembly comprising an electrode structure comprising a positive electrode, a negative electrode, and a solid electrolyte layer disposed between the positive electrode and the negative electrode, wherein polymer layers are comprised on both ends of the electrode assembly.

In addition, the present invention provides the electrode assembly in which the yield strength of the polymer layer is 5MPa or more and 20MPa or less.

In addition, the present invention provides the electrode assembly in which the thickness of the polymer layer satisfies Equation 1 below:

[Equation 1]

$$\text{Thickness } (\mu m) \geq 2.5(\mu m \cdot cm^2/mAh \cdot number) \times X(mAh/cm^2) \times Y(number)$$

wherein X represents the capacity per unit area of the positive electrode, and Y represents the number of positive electrodes in the electrode assembly.

In addition, the present invention provides the electrode assembly in which the polymer layer is formed of rubber or silicone resin.

In addition, the present invention provides the electrode assembly in which the solid electrolyte layer comprises a sulfide-based solid electrolyte, an oxide-based solid electrolyte, a polymer-based solid electrolyte, or two or more thereof.

In addition, the present invention provides the electrode assembly in which the solid electrolyte layer is a sulfide-based solid electrolyte with an argyrodite structure.

In addition, the present invention provides the electrode assembly in which the solid electrolyte layer comprises one or more selected from the group consisting of $Li_2S\text{-}P_2S_5$, $Li_6PS_5Cl$, $Li_{10}GeP_2S_{12}$, $Li_3PS_4$, and $Li_7P_3S_{11}$.

In addition, the present invention provides the electrode assembly in which the electrode assembly comprises a structure obtained by stacking 1 to 100 of the electrode structures.

In addition, the present invention provides the electrode assembly in which the positive electrode comprises a positive electrode active material, a sulfide-based solid electrolyte, an electrically conductive material and a binder.

In addition, the present invention provides a pouch-type secondary battery comprising the electrode assembly.

[Advantageous Effects]

The electrode assembly according to the present invention can effectively control the change in the internal pressure of the battery due to the change in volume that occurs during the charging and discharging of the secondary battery, by comprising a polymer layer with a specific yield strength and a specific thickness on both ends of the electrode assembly.

As described above, the present invention can improve the lifetime properties of the secondary battery by effectively controlling the change in internal pressure that occurs during the charging and discharging of the secondary battery.

[Description of Drawings]

    FIG. 1 is a cross-sectional view of a typical conventional pouch-type secondary battery.
    FIG. 2 is a cross-sectional view of a pouch-type secondary battery according to the present invention.

FIG. 3 is a graph showing the lifetime properties (capacity retention rate) of pouch-type secondary batteries manufactured according to Examples 1 to 5 of the present invention and Comparative Examples 1 to 4.

FIG. 4 is a graph showing the lifetime properties (capacity retention rate) of pouch-type secondary batteries manufactured according to Example 6 of the present invention and Comparative Example 5.

[Best Mode]

Hereinafter, the present invention will be described in more detail with reference to the drawings according to embodiments of the present invention, but the scope of the present invention is not limited thereto.

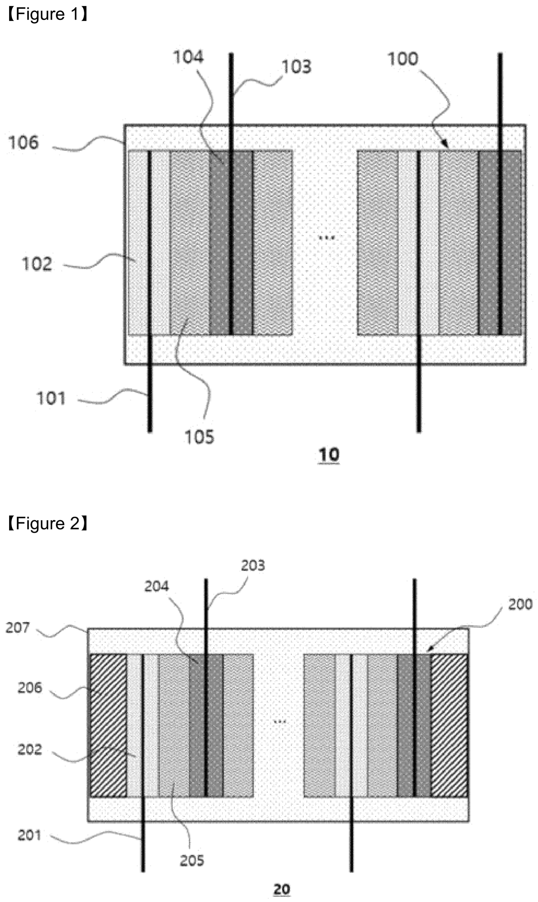

Referring to FIG. 1, a conventional pouch-type secondary battery is provided with a stacked electrode assembly 100 in which a plurality of electrode structures are stacked inside the pouch-type battery case 106. The electrode assembly 100 consists of a negative electrode in which the negative electrode active material layers 102 are stacked on both sides of a negative electrode current collector 101, a positive electrode in which positive electrode active material layers 104 are stacked on both sides of a positive electrode current collector 103, and a solid electrolyte layer 105 interposed between the positive electrode and the negative electrode.

Such a conventional pouch-type secondary battery has a problem that as the battery itself repeatedly expands and contracts during the charging and discharging process, the internal pressure of the battery is changed due to a change in the volume of the electrode assembly, thereby shortening the lifetime of the battery.

In order to solve the above conventional problems, the present invention provides an electrode assembly comprising an electrode structure comprising a positive electrode, a negative electrode, and a solid electrolyte layer disposed between the positive electrode and the negative electrode, wherein polymer layers are comprised on both ends of the electrode assembly.

In one embodiment of the present invention, the electrode assembly may be the electrode assembly 200 shown in FIG. 2.

Specifically, referring to FIG. 2, the electrode assembly according to the present invention may have a structure which comprises a negative electrode in which negative electrode active material layers 202 are stacked on both sides of a negative electrode current collector 201, a positive electrode in which positive electrode active material layers 204 are stacked on both sides of a positive electrode current collector 203, and a solid electrolyte layer 205 interposed between the positive electrode and the negative electrode, and which further comprises polymer layers 206 disposed on both ends.

In one embodiment of the present invention, the negative electrode current collector 201 and the positive electrode current collector 203 may extend to form electrode tabs, respectively, and the electrode tabs may extend to one side of the battery case. The electrode tabs may be fused together with one side of the battery case to form electrode leads extended or exposed to the outside of the battery case.

In another embodiment of the present invention, the polymer layer 206 of the electrode assembly may be in the form of covering the entire surfaces of the adjacent positive electrode and the negative electrode.

In another embodiment of the present invention, the polymer layer 206 of the electrode assembly may be equal to or greater than the areas of adjacent positive and negative electrodes.

In one embodiment of the present invention, the polymer layer may be an elastic body having an elastic force capable of appropriately responding to the internal pressure, in order to control the change in the internal pressure depending on the change in the volume of the pouch-type secondary battery.

In another embodiment of the present invention, the yield strength of the polymer layer may be 5MPa or more and 20MPa or less. More specifically, the yield strength of the polymer layer may be 5MPa or more, 6MPa or more, 7MPa or more, 8MPa or more, 9MPa or more, 10MPa or more, 11MPa or more, 12MPa or more, and 20MPa or less, 19MPa or less, 18MPa or less, 17MPa or less, 16MPa or less, 15MPa or less, 14MPa or less, 13MPa or less, but is not limited thereto.

The polymer layer may apply a constant pressure to the battery assembly during operation by satisfying the range of the yield strength, so that the lithium metal layer forming the negative electrode is in contact with the solid electrolyte layer at a constant pressure, thereby suppressing the formation of lithium dendrites. In addition, the polymer layer can secure the structural stability of the battery, by contracting as much as it corresponds to the expanding volume of the electrode assembly during operation of the battery.

If the yield strength of the polymer layer is out of the above range, since the internal pressure of the pouch-type secondary battery cannot be effectively controlled, it is preferable that the yield strength of the polymer layer satisfies the above range.

In one embodiment of the present invention, the thickness of the polymer layer may satisfy Equation 1 below.

[Equation 1]

$$\text{Thickness}(\mu m) \geq 2.5(\mu m \cdot cm^2/mAh \cdot number) \times X(mAh/cm^2) \times Y(number)$$

wherein X represents the capacity per unit area of the positive electrode, and Y represents the number of positive electrodes in the electrode assembly.

The polymer layer serves to buffer a change in the volume of the electrode assembly during operation of the battery, and preferably has a thickness sufficient to buffer the change in the volume of the electrode assembly.

That is, if the thickness of the polymer layer of the present invention does not satisfy the above range, since the change in the volume of the electrode assembly cannot be sufficiently buffered to effectively control the internal pressure of the electrode assembly, it is preferable that the thickness of the polymer layer satisfies the above range.

However, if the thickness of the polymer layer is too thick, since it is undesirable because the volume of the battery may become excessively large, the thickness of the polymer layer is preferably less than 5000 $\mu$m. The thickness of the polymer layer may be, for example, 3000 $\mu$m or less, 1000 $\mu$m or less, 500 $\mu$m or less, or 100 $\mu$m or less, but is not limited thereto.

In one embodiment of the present invention, the polymer layer may be an elastic body, and the elastic body may have a structure made of rubber or silicone resin, but is not limited thereto.

The polymer layer is not limited in its type and composition, as long as it can cover the surface of the positive electrode and the negative electrode of both ends of the battery assembly, and has a uniform thickness and uniform yield strength, and as long as it does not affect the operation of the battery.

The polymer layer may be a silicone rubber pad in terms of maintaining a uniform thickness and uniform yield strength without affecting the operation of the battery.

In one embodiment of the present invention, the solid electrolyte layer is not particularly limited to specific components, and may comprise one or more of a crystalline solid electrolyte, an amorphous solid electrolyte, or an inorganic solid electrolyte such as a glass-ceramic solid electrolyte.

In one embodiment of the present invention, the solid electrolyte layer may comprise a sulfide-based solid electrolyte, an oxide-based solid electrolyte, a polymer-based solid electrolyte, or two or more thereof.

In another embodiment of the present invention, the solid electrolyte layer may comprise a sulfide-based solid electrolyte having an argyrodite structure.

The solid electrolyte layer may preferably comprise a sulfide-based solid electrolyte, and examples of such a sulfide-based solid electrolyte comprise lithium sulfide, silicon sulfide, germanium sulfide, and boron sulfide. Specific examples of such solid electrolyte may comprise LPS type solid electrolyte such as $Li_2S-P_2S_5$, and $Li_{3.833}Sn_{0.833}As_{0.166}S_4$, $Li_4SnS_4$, $L_{13.25}G_{20.25}P_{0.75}S_4$, $B_2S_3-Li_2S$, $xLi_2S-(100-x)P_2S_5$ (x=70-80), $Li_2S-SiS_2-Li_3N$, $Li_2S-P_2S_5-LiI$, $Li_2S-SiS_2-LiI$, $Li_2S-B_2S_3-LiI$, $Li_3N$, LISICON, LIPON($Li_{3+y}PO_{4-x}N_x$), Thio-LISICON($Li_{3.25}Ge_{0.25}P_{0.75}S_4$), $Li_{20}-Al_2O_3-TiO_2-P_2O_5$(LATP) and the like.

Preferably, the solid electrolyte layer may comprise one or more selected from the group consisting of $Li_2S-P_2S_5$, $Li_6PS_5Cl$, $Li_{10}GeP_2S_{12}$, $Li_3PS_4$, and $Li_7P_3S_{11}$.

In one embodiment of the present invention, the electrode assembly may comprise a plurality of electrode structures, and for example, may comprise 1 to 100 electrode structures, and preferably may comprise 1 to 50 electrode structures.

In one embodiment of the present invention, the positive electrode may be composed of a positive electrode active material layer and a positive electrode current collector, and the positive electrode active material layer may contain a positive electrode active material, a sulfide-based solid electrolyte, an electrically conductive material, and a binder.

In another embodiment of the present invention, the binder may be crosslinked. The sulfide-based solid electrolyte in the positive electrode active material layer may be contained in a ratio of 5 parts by weight to 100 parts by weight relative to 100 parts by weight of the positive electrode active material. In addition, the binder may be contained in a ratio of 0.1 to 10 parts by weight relative to 100 parts by weight of the positive electrode active material layer and also the electrically conductive material may be contained in a ratio of 0.1 to 10 parts by weight relative to 100 parts by weight of the positive electrode active material layer.

In one embodiment of the present invention, the crosslinking of the binder in the positive electrode active material layer can be accomplished by the introduction **of a crosslinking** agent solution. According to another embodiment of the present invention, after the entire electrode assembly is impregnated with the crosslinking agent solution, the crosslinking is proceeded throughout the electrode assembly, so that the crosslinking of the binder can also be formed at the interface between such as the electrode and the solid electrolyte. Alternatively, in another embodiment of the present invention, depending on the object to be impregnated with the crosslinking agent solution, the crosslinking may be made only within the positive electrode.

In one embodiment of the present invention, as the binder is crosslinked, mechanical properties such as elasticity or rigidity of the positive electrode are improved, so that even if the positive electrode active material expands and/or contracts during the charging and discharging, the positive electrode active material layer can suppress or mitigate these effects, and since the adhesion property of the interface between the positive electrode active material layer and the solid electrolyte layer is maintained, it is possible to provide an all-solid-state battery with excellent cycle characteristics.

In one embodiment of the present invention, the binder comprises a rubber-based binder resin. The rubber-based binder resin may be dissolved in a non-polar solvent. If the component of the sulfide-based solid electrolyte comes into contact with a polar solvent, it may cause deterioration of physical properties such as decrease in ion conductivity, etc. Therefore, in the present invention, when manufacturing the electrode, the use of a polar solvent is excluded and a non-polar solvent is used, and a rubber-based binder resin having high solubility in a non-polar solvent is used as a component of the binder. In one embodiment of the present invention, as the rubber-based binder resin, those soluble in 50 wt.% or more, 70 wt.% or more, 90 wt.% or more, or 99 wt.% or more at about 25 °C with respect to the solvent used may be selected and used. In addition, the solvent may comprise a non-polar solvent having a polarity index of 0 to 3 and/or a dielectric constant of less than 5. By using the non-polar solvent as described above, it is possible to prevent a decrease in the ion conductivity of the sulfide-based solid electrolyte due to the use of a polar solvent.

In one embodiment of the present invention, the positive electrode active material may comprise one or a mixture of two or more of layered compounds such as lithium manganese composite oxide ($LiMn_2O_4$, $LiMnO_2$ etc.), lithium cobalt oxide ($LiCoO_2$), lithium nickel oxide ($LiNiO_2$) or compounds substituted with one or more transition metals; lithium manganese oxides such as formula $Li_{1+x}Mn_{2-x}O_4$ (wherein x is 0 ~ 0.33), $LiMnO_3$, $LiMn_2O_3$, and $LiMnO_2$; lithium copper oxide ($Li_2CuO_2$); vanadium oxides such as $LiV_3O_8$, $LiFe_3O_4$, $V_2O_5$, and $Cu_2V_2O_7$; Ni site type lithium nickel oxide represented by formula $LiNi_{1-x}M_xO_2$(wherein M = Co, Mn, Al, Cu, Fe, Mg, B or Ga, x = 0.01 ~ 0.3); lithium manganese composite oxide represented by formula $LiMn_{2-x}M_xO_2$ (wherein M = Co, Ni, Fe, Cr, Zn or Ta, x = 0.01 ~ 0.1) or $Li_2Mn_3MO_8$ (wherein M = Fe, Co, Ni, Cu or Zn); $LiMn_2O_4$ in which part of Li in the formula is substituted with alkaline earth metal ions; a disulfide compound; $Fe_2(MoO_4)_3$.

In one embodiment of the present invention, the binder may comprise a rubber-based binder resin. Since PVdF-based binder resin or acrylic binder resin used as a binder for an electrode has low solubility in a non-polar solvent, it is difficult to prepare a slurry for an electrode. Therefore, in the present invention, a rubber-based resin having high solubility in a non-polar solvent is used as a binder. In one embodiment of the present invention, the rubber-based binder resin may comprise at least one selected from the group consisting of natural rubber, butyl-based rubber, bromo-butyl-based rubber, chlorinated butyl-based rubber, styrene isoprene-based rubber, styrene-ethylene-butylene-styrene-based rubber, acrylonitrile-butadiene-styrene-based rubber, polybutadiene-based rubber, nitrile-butadiene-based rubber, styrene-butadiene-based rubber, styrene-butadiene styrene-based rubber (SBS), and ethylene propylene diene monomer(EPDM)-based rubber.

In one embodiment of the present invention, the electrically conductive material may be, for example, any one selected from the group consisting of graphite, carbon black, carbon fiber or metal fiber, metal powder, electrically conductive whisker, electrically conductive metal oxide, activated carbon and polyphenylene derivatives, or a mixture of two or more kinds of conductive materials among them. More specifically, the electrically conductive material may be at least one selected from the group consisting of natural graphite, artificial graphite, super-p, acetylene black, Ketjen black, channel black, furnace black, lamp black, thermal black, Denka black, aluminum powder, nickel powder, zinc oxide, potassium titanate and titanium oxide, or a mixture of two or more kinds of conductive materials among them.

In one embodiment of the present invention, the negative electrode may contain a negative electrode active material stacked on a negative electrode current collector, and the negative electrode active material may comprise any one selected from the group consisting of lithium metal oxide, carbon such asnon-graphitizable carbon, graphite-based carbon; metal composite oxides such as $Li_xFe_2O_3$(0≤x≤1), $Li_xWO_2$(0≤x≤1), $Sn_xMe_{1-x}Me'_yO_z$(Me: Mn, Fe, Pb, Ge; Me': Al, B, P, Si, elements of groups 1, 2, and 3 of the periodic table, halogen; 0<x≤1; 1≤y≤3; 1≤z≤8); lithium metal; lithium alloy; silicon-based alloy; tin-based alloy; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$; an electrical conductivity polymer such as polyacetylene; Li-Co-Ni based material; and titanium oxide, or a mixture of two or more thereof.

In one embodiment of the present invention, the positive electrode current collector and the negative electrode current collector are not particularly limited as long as they have high conductivity without causing chemical changes in the battery, and for example, may be stainless steel, copper, aluminum, nickel, titanium, sintered carbon, or aluminum or stainless steel surface-treated with carbon, nickel, titanium, silver or the like.

The present invention provides a pouch-type secondary battery housing the electrode assembly described above therein.

Specifically, the above-described positive electrode, the solid electrolyte layer, and the negative electrode are sequentially stacked and laminated to manufacture a unit electrode structure, and then the solid electrolyte layer is interposed between the plurality of unit electrode structures to prepare a stack of unit electrode structures, and thereafter, the above-described polymer layers are laminated on both ends of the stack of the unit electrode structures, and then, they are housed in a pouch-type battery case, and then sealed to manufacture a pouch-type secondary battery.

Hereinafter, preferred examples are presented to help the understanding of the present invention, but the following examples are provided for easier understanding of the present invention, and the present invention is not limited thereto.

**Example**

**- Manufacture of pouch-type secondary battery**

**1. Example 1**

A positive electrode active material, a sulfide-based solid electrolyte ($Li_6PS_5Cl$) having an argyrodite structure, an electrically conductive material, and a binder were mixed in a mass ratio of 80:15:1:4 to prepare a slurry for a positive electrode active material. The slurry for the positive electrode active material was applied to an aluminum current collector with a loading amount of 4 mAh/cm², and then dried to manufacture a positive electrode. Lithium metal was pressed to a thickness of 20 $\mu$m on copper foil and used as a negative electrode. As a solid electrolyte layer, a sulfide-based solid electrolyte ($Li_6PS_5Cl$) with an argyrodite structure was used.
The positive electrode, the solid electrolyte layer, and the negative electrode were sequentially stacked, and then laminated to manufacture a unit electrode structure. Two of the above unit electrode structures were prepared, and the solid electrolyte layer was laminated between the positive electrode of each unit electrode structure and another unit electrode structure to prepare a stack of a unit electrode structure.
Thereafter, a silicone rubber pad having a thickness of 20 $\mu$m and a yield strength of 5 MPa as polymer layers were attached to both ends of the stack of the unit electrode structure to manufacture an electrode assembly.
The electrode assembly was housed in a pouch-type battery case and then, sealed to prepare a pouch-type secondary battery.

**2. Example 2**

A pouch-type secondary battery was manufactured in the same manner as in Example 1, except that the yield strength of the silicone rubber pad was 10 MPa.

**3. Example 3**

A pouch-type secondary battery was manufactured in the same manner as in Example 1, except that the yield strength of the silicone rubber pad was 20 MPa.

**4. Example 4**

A pouch-type secondary battery was manufactured in the same manner as in Example 1, except that the thickness of the silicone rubber pad was 50 $\mu$m.

**5. Example 5**

A pouch-type secondary battery was manufactured in the same manner as in Example 1, except that the thickness of the silicone rubber pad was 100 $\mu$m.

**6. Example 6**

A pouch-type secondary battery was manufactured in the same manner as in Example 1, except that the slurry for the positive electrode active material was applied to the aluminum current collector with a loading amount of 3 mAh/cm² and the thickness of the silicone rubber pad was 15 $\mu$m.

**Comparative Example**

**1. Comparative Example 1**

A pouch-type secondary battery was manufactured in the same manner as in Example 1 except that the silicone rubber pad was not comprised.

**2. Comparative Example 2**

A pouch-type secondary battery was manufactured in the same manner as in Example 1 except that the yield strength of the silicone rubber pad was 3 MPa.

### 3. Comparative Example 3

A pouch-type secondary battery was manufactured in the same manner as in Example 1 except that the yield strength of the silicone rubber pad was 30 MPa.

### 4. Comparative Example 4

A pouch-type secondary battery was manufactured in the same manner as in Example 1 except that the thickness of the silicone rubber pad was 15 μm.

### 5. Comparative Example 5

A pouch-type secondary battery was manufactured in the same manner as in Example 6 except that the thickness of the silicone rubber pad was 10 μm.

### Experimental example

### 1. Measurement of change in volume occurring during charging/discharging of pouch-type secondary battery

For the pouch-type secondary batteries according to Examples 1 to 5 and Comparative Examples 1 to 4, the change in volume occurring during charging/discharging was measured.

Specifically, for pouch-type secondary batteries according to Examples 1 to 5 and Comparative Examples 1 to 4, the charging and discharging were performed initially (once) at room temperature using an electrochemical device for charging and discharging, and then the volume of pouch-type secondary batteries was measured.

In the charging and discharging, the charging was performed by applying a current up to a voltage of 4.2V at a current density of 0.1C-rate, and the discharging was performed up to 3.0V at the same current density. This is defined as the initial volume.

Thereafter, after performing the charging and discharging a total of 100 times, the volume was measured. This is defined as the final volume.

The volume change rate (%) was calculated by substituting the measured values of the initial volume and the final volume into Equation 2 below, and the results are shown in Table 1.

$$\text{Volume change rate (\%)} = \{(\text{final volume-initial volume})/\text{initial volume}\} \times 100(\%) \qquad \text{[Equation 2]}$$

Table 1:

|  | Volume change rate (%) |
|---|---|
| Example 1 | 2 |
| Example 2 | 2 |
| Example 3 | 2 |
| Example 4 | 2 |
| Example 5 | 2 |
| Comparative Example 1 | 6 |
| Comparative Example 2 | 6 |
| Comparative Example 3 | 2 |
| Comparative Example 4 | 5 |

Referring to Table 1 above, it was confirmed that in the case of the pouch-type secondary batteries according to Examples 1 to 5 of the present invention, the change in internal pressure was effectively controlled compared to the pouch-type secondary batteries according to Comparative Examples 1 to 2 and 4.

Meanwhile, in the case of the pouch-type secondary battery according to Comparative Example 3, because the yield strength of the silicone rubber pad is too large, although the change in the volume of the pouch-type secondary battery was small, the internal pressure of the pouch-type secondary battery was excessively high, thereby resulting in a short circuit and thus resulting in rapid deterioration of lifetime property.

**2. Evaluation of lifetime property of pouch-type secondary battery**

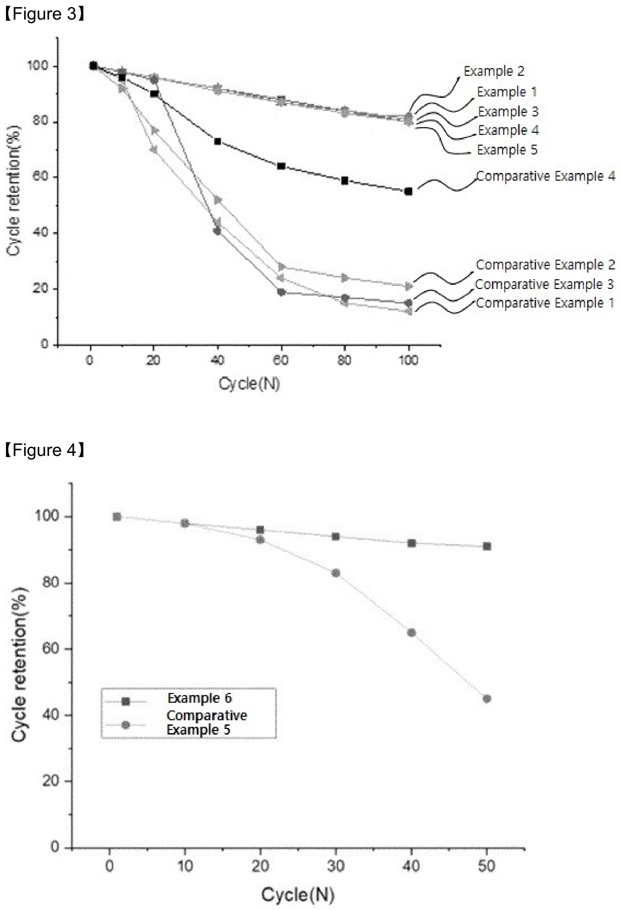

The capacity retention rate was measured using the pouch-type secondary batteries according to Examples 1 to 6 and Comparative Examples 1 to 5 in the following manner. The results are shown in Table 2, FIG. 3 and FIG. 4.

(1) Specifically, for pouch-type secondary batteries according to Examples 1 to 5 and Comparative Examples 1 to 4, the charging and discharging were performed initially (once) at room temperature using an electrochemical device for charging and discharging. In the charging and discharging, the charging was performed by applying a current up to a voltage of 4.2V at a current density of 0.1C-rate, and the discharging was performed up to 3.0V at the same current density. The charging and discharging described above was performed a total of 100 times.

The capacity of each battery was measured during the charging and discharging process as described above.
From this, the capacity retention rate of each battery was calculated as in Equation 3 below, and the results are shown in Table 2 below.

[Equation 3]

Capacity retention rate (%) = (capacity at $100^{th}$ cycle/initial capacity) X 100

Table 2:

|  | Initial discharging capacity (mAh/g) | Discharging capacity after 100 cycles (mAh/g) | Capacity retention rate (%) |
|---|---|---|---|
| Example 1 | 200 | 162 | 81 |
| Example 2 | 200 | 164 | 82 |
| Example 3 | 200 | 160 | 80 |
| Example 4 | 200 | 162 | 81 |
| Example 5 | 200 | 160 | 80 |
| Comparative Example 1 | 170 | 20 | 12 |
| Comparative Example 2 | 180 | 38 | 21 |
| Comparative Example 3 | 200 | 30 | 15 |
| Comparative Example 4 | 200 | 110 | 55 |

As shown in Table 2 above, it was confirmed that the capacity retention rate of the pouch-type secondary batteries according to Examples 1 to 5 of the present invention was significantly improved compared to the pouch-type secondary batteries according to Comparative Examples 1 to 4.
(2) Also, for pouch-type secondary batteries according to Example 6 and Comparative Examples 5, the charging and discharging were performed initially (once) at room temperature using an electrochemical device for charging and discharging. In the charging and discharging, the charging was performed by applying a current up to a voltage of 4.2V at a current density of 0.1C-rate, and the discharging was performed up to 3.0V at the same current density. The charging and discharging described above was performed a total of 50 times.
The capacity of each battery was measured during the charging and discharging process as described above, and the results are shown in FIG. 4.
As shown in FIG. 4, it was confirmed that the capacity retention rate of the pouch-type secondary battery according to Example 6 of the present invention was significantly improved compared to the pouch-type secondary battery according to Comparative Example 5.
(3) When considering this point, it was confirmed that in the pouch-type secondary battery of the present invention, when an elastomer having a yield strength of 5 to 20 MPa and a thickness satisfying Equation 1 below is disposed on both ends of the stack of the unit electrode structures, the lifetime property is remarkably improved.

[Equation 1]

$$\text{Thickness}(\mu m) \geq 2.5(\mu m \cdot cm^2/mAh \cdot number) \times X(mAh/cm^2) \times Y(number)$$

wherein X represents the capacity per unit area of the positive electrode, and Y represents the number of positive electrodes in the electrode assembly.

All simple modifications and variations of the present invention fall within the scope of the present invention, and the specific protection scope of the present invention will become clear from the appended claims.

[Description of Reference Numerals]

10, 20: Pouch-type secondary battery
100, 200: Electrode assembly
101, 201: Negative electrode current collector
102, 202: Negative electrode active material layer
103, 203: Positive electrode current collector
104, 204: Positive electrode active material layer
105, 205: Solid electrolyte layer
106, 207: Battery case
206: Polymer layer

In view of the above disclosure, the present invention can be implemented according to any one of the following itemized embodiment examples.

ITEM 1. An electrode assembly comprising an electrode structure comprising a positive electrode, a negative electrode, and a solid electrolyte layer between the positive electrode and the negative electrode; and polymer layers at both ends of the electrode assembly.
ITEM 2. The electrode assembly according to ITEM 1, wherein the yield strength of the polymer layer is 5MPa or more and 20MPa or less.
ITEM3. The electrode assembly according to ITEM 1, wherein a thickness of the polymer layer satisfies Equation 1 below:

[Equation 1]

$$\text{Thickness}(\mu m) \geq 2.5(\mu m \cdot cm^2/mAh \cdot number) \times X(mAh/cm^2) \times Y(number)$$

wherein X represents a capacity per unit area of the positive electrode, and Y represents a number of positive electrodes in the electrode assembly.
ITEM 4. The electrode assembly according to ITEM 1, wherein the polymer layer is formed of rubber or silicone resin.
ITEM 5. The electrode assembly according to ITEM 1, wherein the solid electrolyte layer comprises a sulfide-based solid electrolyte, an oxide-based solid electrolyte, a polymer-based solid electrolyte, or two or more thereof.
ITEM 6. The electrode assembly according to ITEM 1, wherein the solid electrolyte layer comprises a sulfide-based solid electrolyte having an argyrodite structure.
ITEM 7. The electrode assembly according to ITEM 1, wherein the solid electrolyte layer comprises one or more selected from the group consisting of $Li_2S-P_2S_5$, $Li_6PS_5Cl$, $Li_{10}GeP_2S_{12}$, $Li_3PS_4$, and $Li_7P_3S_{11}$.
ITEM 8. The electrode assembly according to ITEM 1, wherein the electrode assembly comprises a structure in which 1 to 100 of the electrode structures are stacked.
ITEM 9. The electrode assembly according to ITEM 1, wherein the positive electrode comprises a positive electrode active material, a sulfide-based solid electrolyte, an electrically conductive material, and a binder.
ITEM 10. A pouch-type secondary battery comprising the electrode assembly according to ITEM 1.

**Claims**

1. An electrode assembly comprising an electrode structure comprising a positive electrode, a negative electrode, and a solid electrolyte layer between the positive electrode and the negative electrode; and polymer layers at both ends of the electrode assembly.

2. The electrode assembly according to claim 1, wherein the yield strength of the polymer layer is 5MPa or more and 20MPa or less.

3. The electrode assembly according to claim 1, wherein a thickness of the polymer layer satisfies Equation 1 below:

[Equation 1]

$$\text{Thickness } (\mu m) \geq 2.5(\mu m \cdot cm^2/mAh \cdot number) \times X(mAh/cm^2) \times Y(number)$$

wherein X represents a capacity per unit area of the positive electrode, and Y represents a number of positive electrodes in the electrode assembly.

4. The electrode assembly according to claim 1, wherein the polymer layer is formed of rubber or silicone resin.

5. The electrode assembly according to claim 1, wherein the solid electrolyte layer comprises a sulfide-based solid electrolyte, an oxide-based solid electrolyte, a polymer-based solid electrolyte, or two or more thereof.

6. The electrode assembly according to claim 1, wherein the solid electrolyte layer comprises a sulfide-based solid electrolyte having an argyrodite structure.

7. The electrode assembly according to claim 1, wherein the solid electrolyte layer comprises one or more selected from the group consisting of $Li_2S$-$P_2S_5$, $Li_6PS_5Cl$, $Li_{10}GeP_2S_{12}$, $Li_3PS_4$, and $Li_7P_3S_{11}$.

8. The electrode assembly according to claim 1, wherein the electrode assembly comprises a structure in which 1 to 100 of the electrode structures are stacked.

9. The electrode assembly according to claim 1, wherein the positive electrode comprises a positive electrode active material, a sulfide-based solid electrolyte, an electrically conductive material, and a binder.

10. A pouch-type secondary battery comprising the electrode assembly according to claim 1.

【Figure 1】

10

【Figure 2】

20

【Figure 3】

【Figure 4】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210128239
- KR 1020220121373
- KR 20140141825
- KR 20210039213